# EUROPÄISCHE PATENTSCHRIFT

(11) **EP 1 447 245 B1**
(45) Veröffentlichungstag und Bekanntmachung des Hinweises auf die Patenterteilung: **09.07.2008**
(21) Anmeldenummer: 03003471.4
(22) Anmeldetag: 15.02.2003
(51) Int. Cl.: B60C 25/00

(54) **Vorrichtung zur Montage oder Demontage eines Notlaufstützkörpers für Reifen**
Device for mounting or dismounting tyres runflat support
Dispositif de montage ou démontage pour appui de roulage à plat pour pneumatiques

(43) Veröffentlichungstag der Anmeldung: 18.08.2004
(73) Patentinhaber: Continental Aktiengesellschaft, 30165 Hannover (DE)
(72) Erfinder: Winkler, Jens, Dr., 30173 Hannover (DE); Doering, Werner, 30823 Garbsen (DE); Dinic, Miroslav, 30455 Hannover (DE); Dall'Antonia, Michael, 30453 Hannover (DE)
(74) Vertreter: Finger, Karsten

(56) Entgegenhaltungen:
- EP-A- 0 174 421
- US-A- 4 251 906

## Beschreibung

Die Erfindung betrifft eine Vorrichtung zur Montage eines Notlaufstützkörpers in einen Reifen mit Mitteln zum Fixieren des Reifens.

Ein Nachteil von schlauchlosen Luftreifen ist das mögliche Auftreten einer Undichtigkeit, wodurch der Luftdruck im Reifen abfällt und der Reifen kollabiert. Bei einer hohen Fahrzeuggeschwindigkeit kann das plötzliche Entweichen der Luft im Reifen zu gefährlichen Situationen führen, in denen der Fahrer die Kontrolle über sein Fahrzeug verliert. Ferner kann der Reifen bei einem Druckverlust dadurch beschädigt werden, dass die Fahrzeugfelge bzw. das Felgenhorn sich in die Innenseele und darüber liegende Lagen einschneidet.

Für Luftreifen sind verschiedene Notlaufstützkörper-Systeme bekannt.
Die DE 197 07 090 A1 offenbart ein Fahrzeugrad mit einem innerhalb des Luftreifenhohlraumes auf der Felge abgestützten Notlaufstützkörper, der aus einem schalenförmigen Ringkörper gebildet wird. Der Notlaufstützkörper wird über ein oder mehrere Stützelemente auf der Felge abgestützt. Die Stützelemente gehen dabei in den schalenförmigen Ringkörper über und sind entweder ein Teil desselben oder bestehen aus einem im Vergleich zum schalenförmigen Ringkörper anderen Werkstoff.

Die EP 0174421 A1 zeigt ein Verfahren zur Montage einer Fahrzeugfelge mit einem Notlaufstützkörper in einem Reifenhohlraum.

Bei einteiligen Notlaufstützkörpem tritt in der Regel das Problem auf, den Notlaufstützkörper in den Reifen einzusetzen. Die Montage des Notlaufstützkörpers in den Reifen erweist sich deswegen als schwierig, weil der Außendurchmesser des Notlaufstützkörpers im Allgemeinen größer ist als der Innendurchmesser des Reifens, der durch den Innendurchmesser der Reifenwülste festgelegt ist. Es ist bekannt, den Notlaufstützkörper manuell unter Zuhilfenahme von stangenförmigen Reifenmontierwerkzeugen in den Reifen bzw. den Reifenhohlraum einzusetzen, wobei die Reifenwülste mit einem hohen Kraftaufwand auseinander gedehnt werden. Der Nachteil bei dieser Art der manuellen Montage ist, dass der Reifenmonteur sowohl ein gewisses Maß an Geschicklichkeit besitzen als auch über die entsprechenden Kräfte verfügen muss. Des Weiteren ist die Verletzungsgefahr für den Reifenmonteur hoch, da das Reifenmontierwerkzeug beim Montieren abspringen kann. Bei der Demontage des Notlaufstützkörpers aus dem Reifenhohlraum treten im Allgemeinen ähnliche Schwierigkeiten auf wie beim Montagevorgang.

Der Erfindung liegt die Aufgabe zugrunde, eine Vorrichtung zu schaffen, mit welcher sowohl die Montage des Notlaufstützkörpers in den Reifen als auch die Demontage des Notlaufstützkörpers aus dem Reifen auf eine sichere und einfache Weise erfolgt.

Gelöst wird die Aufgabe gemäß den kennzeichnenden Merkmalen von Anspruch 1 dadurch, dass die Vorrichtung eine Hebevorrichtung aufweist, wobei die radiale Ebene des Notlaufstützkörpers im Wesentlichen senkrecht zur radialen Ebene des Reifens positioniert, der Notlaufstützkörper mit der Hebevorrichtung in die Öffnungen des Reifens gezogen und anschließend in den Reifenhohlraum geschwenkt wird. Die Aufgabe der Montage wird ebenfalls gemäß den kennzeichnenden Merkmalen des nebengeordneten Anspruchs 11 gelöst.
Ferner wird die Aufgabe der Demontage gemäß dem nebengeordneten Anspruch 5 dadurch gelöst, dass der mit einem Tragmittel verbundene Notlaufstützkörper mittels einer Hebevorrichtung aus dem Reifenhohlraum gezogen wird.

Ein Vorteil der Erfindung ist insbesondere darin zu sehen, dass durch die erfindungsgemäße Vorrichtung die manuelle Montage sowie Demontage des Notaufstützkörpers entfällt. Der Notlaufstützkörper wird nunmehr mit Hilfe der Vorrichtung auf eine sichere und einfache Weise in den Reifenhohlraum eingesetzt, ohne dass dabei ein hoher Kraftaufwand durch den Reifenmonteur erforderlich ist. Außerdem wird durch die Vorrichtung die Verletzungsgefahr des Monteurs ausgeschlossen, da der Einsatz eines stangenförmigen Reifenmontierwerkzeuges nicht mehr notwendig ist.

In einer vorteilhaften Weiterbildung der Erfindung ist vorgesehen, dass der Notlaufstützkörper zu dem Zeitpunkt in den Reifenhohlraum geschwenkt wird, wenn der Mittelpunkt der radialen Ebene des Notlaufstützkörpers im Wesentlichen in der radialen Ebene des Reifens liegt. Das Einschwenken des Notlaufstützkörpers in den Reifenhohlraum lässt sich zu diesem Zeitpunkt am einfachsten realisieren, da der Kraftaufwand in diesem Moment sehr klein ist.

In einer weiteren vorteilhaften Weiterbildung der Erfindung ist vorgesehen, dass die Öffnung im Montagetisch Aussparungen zur Aufnahme des Notlaufstützkörpers aufweist. Die Aussparungen im Montagetisch haben die Funktion, den Notlaufstützkörper während des Montageprosses in aufrechter Position zu führen und damit ein zu frühzeitiges Wegkippen des Notlaufstützkörpers zu unterbinden.

In einer weiteren vorteilhaften Weiterbildung der Erfindung ist vorgesehen, dass der Notlaufstützkörper mit einem Tragmittel in die Öffnungen des Reifens gezogen wird. Ein solches Tragmittel, beispielsweise in Form eines Traggurtes, kann auf eine einfache Art und Weise am Notlaufstützkörper befestigt werden, wodurch die Montage und Demontage erleichtert wird.

In einer weiteren vorteilhaften Weiterbildung der Erfindung ist vorgesehen, dass das Tragmittel ein Traggurt ist. Der Traggurt besitzt den Vorteil, dass er den Notlaufstützkörper flächenförmig umschlingt und dadurch ein Verbiegen des Notlaufstützkörpers unterbindet.

In einer weiteren vorteilhaften Weiterbildung der Erfindung ist vorgesehen, dass das die Mittel zum Fixieren des Reifens auf dem Montagetisch flächenförmige Einspannelemente sind. Die flächenförmigen Einspannelemente fixieren den Reifen auf dem Montagetisch und verhindern ein Abheben der Reifenseitenwände bei der Montage oder Demontage des Notlaufstützkörpers.

In einer weiteren vorteilhaften Weiterbildung der Erfindung ist vorgesehen, dass die Einspannelemente über Führungselemente in einer Ebene parallel zur radialen Ebene des Reifens verstellbar sind. Auf diese Weise lässt sich der Montagetisch für verschiedene Reifengrößen einsetzen.

In einer weiteren vorteilhaften Weiterbildung der Erfindung ist vorgesehen, dass im Hohlraum des Notlaufstützkörpers im Verbindungsbereich zum Traggurt ein Schutzkörper angeordnet ist. Der Schutzkörper verhindert eine Deformation des Notlaufstützkörpers in dem Bereich, in dem der Traggurt an dem Notlaufstützkörper anliegt.

In einer weiteren vorteilhaften Weiterbildung der Erfindung ist vorgesehen, dass die Hebevorrichtung ein pneumatisch oder hydraulisch betriebener Hebekran ist. Mit einem solchen Hebekran lässt sich auf eine einfache Weise die notwendige Montagekraft bereitstellen.

Anhand eines Ausführungsbeispiels soll die Erfindung näher erläutert werden. Es zeigen:
- Fig. 1:: eine Seitenansicht der erfindungsgemäßen Vorrichtung
- Fig. 2:: eine Aufsicht des Montagetisches
- Fig. 3:: einen Schutzkörper für den Notlaufstützkörper.

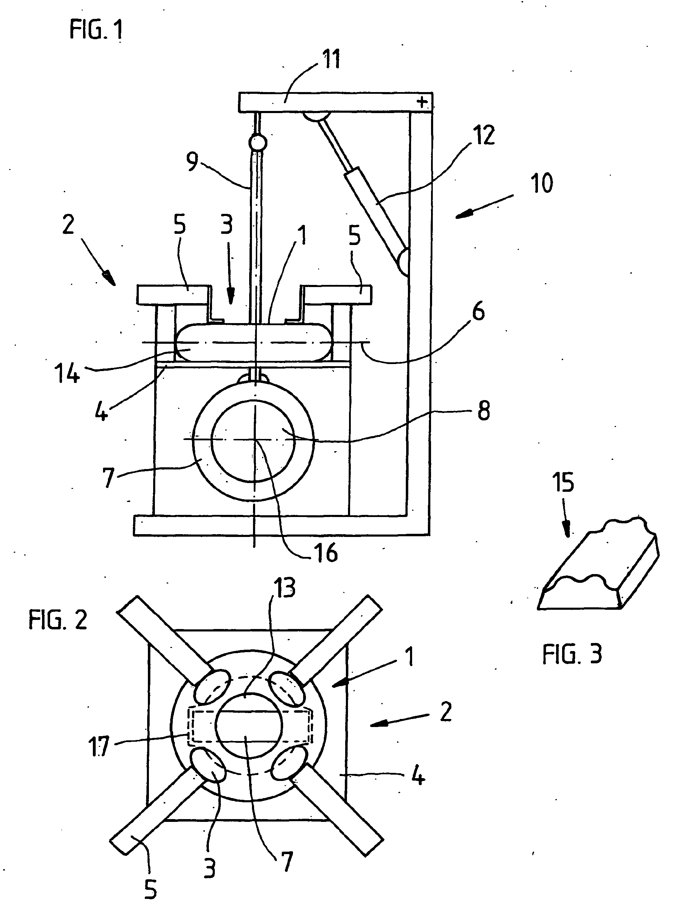

Die Figur 1 zeigt eine Seitenansicht der erfindungsgemäßen Vorrichtung. Der Reifen 1 liegt horizontal auf dem Montagetisch 2 auf und wird über flächenförmige Einspannelemente 3 im Bereich der Reifenseitenwände auf einer auswechselbaren Platte 4 fixiert. Über die Führungselemente 5 lassen sich die Einspannelemente 3 parallel zur radialen Ebene 6 des Reifens 1 verstellen, so dass die Einspannelemente 3 auf die jeweilige Reifengröße eingestellt werden können. Die Platte 4 besitzt eine im Wesentlichen kreisförmige Öffnung, die kleiner ist als der Außendurchmesser des zu montierenden Notlaufstützkörpers 7. Der Notlaufstützkörper 7 wird zunächst aufrecht stehend unterhalb der Platte 4 angeordnet, so dass die radiale Ebene 8 des Notlaufstützkörpers 7, die in der Blattebene der Figur 1 liegt, senkrecht zur radialen Ebene 6 des Reifens 1 steht. Der Notlaufstützkörper 7 wird über einen Traggurt 9, der den Notlaufstützkörper 7 umschlingt, mit dem Hebekran 10 verbunden, der am Tragarm 11 eine Aufnahme für den Traggurt 9 aufweist. Der Traggurt 9 wird über den pneumatischen oder hydraulischen Antrieb 12 nach oben oder unten bewegt. Der Notlaufstützkörper 7 wird zunächst mit dem Hebekran 10 in die Öffnungen des Innendurchmessers 13 des Reifens gezogen. Nachdem der Mittelpunkt 16 der radialen Ebene 8 des Notlaufstützkörpers 7 in etwa in der radialen Ebene 6 des Reifens 1 positioniert wurde, wird der Notlaufstützkörper in den Reifenhohlraum 14 geschwenkt und damit in den Reifen 1 eingesetzt. Der Schwenkvorgang in den Reifenhohlraum 14 kann manuell erfolgen oder unter Zuhilfenahme des Hebekranes 10, der zur Kraftunterstützung beitragen kann. Die Einspannelemente 3 haben beim Montage- und Demontagevorgang die Funktion den Reifen 1 fest auf dem Montagetisch 2 zu fixieren, so dass unter anderem ein Abheben der Reifenseitenwände unterbunden wird. Bei der Demontage des Notlaufstützkörpers 7 aus dem Reifen wird zunächst der Traggurt 9 am horizontal im Reifen 1 liegenden Notlaufstützkörper 7 befestigt. Anschließend wird der Notlaufstützkörper 7 am Traggurt 9 kontinuiertlich aus dem Reifenhohlraum 14 gezogen, wobei die Einspannelemente 3 den Reifen 1 fest mit dem Montagetisch 2 verspannen und dadurch ein Abheben der Reifenseitenwände unterbinden.

Figur 2 zeigt eine Draufsicht des Montagetisches 2. Die Einspannelemente 3 sind mit den Führungselementen 5 verbunden und spannen den Reifen 1 auf dem Montagetisch 2 fest. In der Platte 4 befinden sich Aussparungen 17 zur Aufnahme und Führung des Notlaufstützkörpers 7. Die Aussparungen 17 halten den Notlaufstützkörper bei der Montage in aufrechter Position. Der Reifeninnendurchmesser bzw. Wulstdurchmesser 13 ist die Öffnung des Reifens, durch die der Notlaufstützkörper 7 in den Reifen 1 eingezogen wird, wobei der Außendurchmesser des Notlaufstützkörpers 7 größer ist als der Innendurchmesser 13 des Reifens 1.

Figur 3 zeigt den Schutzkörper 15, der den Hohlraum des in der Figur nicht dargestellten Notlaufstützkörpers im Verbindungsbereich zum Traggurt ausfüllt. Dieser Schutzkörper besitzt die Funktion, ein Verbiegen der Metallschale des Notlaufstützkörpers insbesondere bei der Demontage zu unterbinden. Es handelt sich dabei um einen Kunststoffblock, der als Außenkontur die Kontur des Hohlraumes des Notlaufstützkörpers besitzt. Bei dem Notlaufstützkörper handelt es sich um einen einteiligen Notlaufstützkörper mit einer ringförmigen Metallschale, die zwei nach radial außen gerichtete Wölbungen aufweist und sich über zwei mit der Metallschale verbundene Gummifüße auf einer in der Figur nicht dargestellten Felge abstützt.

### Bezugszeichenliste

### (ist Teil der Beschreibung)

- 1: Reifen
- 2: Montagetisch
- 3: flächenförmige Einspannelemente
- 4: auswechselbare Platte
- 5: Führungselemente
- 6: radiale Ebene des Reifens
- 7: Notlaufstützkörper
- 8: radiale Ebene des Notlaufstützkörpers
- 9: Traggurt
- 10: Hebekran
- 11: Tragarm
- 12: Antrieb für Hebekran
- 13: Innendurchmesser bzw. Wulstdurchmesser des Reifens
- 14: Reifenhohlraum
- 15: Schutzkörper
- 16: Mittelpunkt des Notlaufstützkörpers in der radialen Ebene
- 17: Aussparungen in der Platte des Montagetisches

## Patentansprüche

1. Vorrichtung zur Montage eines Notlaufstützkörpers in einen Reifen mit einem Montagetisch mit Mitteln zum Fixieren des Reifens und mit einer Öffnung im Montagetisch, die im Wesentlichen mit dem Außendurchmesser des Notlaufstützkörpers übereinstimmt,
**dadurch gekennzeichnet, dass**
die Vorrichtung eine Hebevorrichtung (10) aufweist, wobei die radiale Ebene (8) des Notlaufstützkörpers (7) im Wesentlichen senkrecht zur radialen Ebene (6) des Reifens (1) positioniert, der Notlaufstützkörper (7) mit der Hebevorrichtung (10) in die Öffnungen des Reifens (1) gezogen und anschließend in den Reifenhohlraum (14) geschwenkt wird.

2. Vorrichtung nach Anspruch 1,
**dadurch gekennzeichnet, dass**
der Notlaufstützkörper (7) zu dem Zeitpunkt in den Reifenhohlraum (14) geschwenkt wird, wenn der Mittelpunkt (16) der radialen Ebene (8) des Notlaufstützkörpers (7) im Wesentlichen in der radialen Ebene (6) des Reifens (1) liegt.

3. Vorrichtung nach Anspruch 1 oder 2,
**dadurch gekennzeichnet, dass**
die Öffnung im Montagetisch (2) Aussparungen (17) zur Aufnahme des Notlaufstützkörpers (7) aufweist.

4. Vorrichtung nach einem der Ansprüche 1 bis 3,
**dadurch gekennzeichnet, dass**
der Notlaufstützkörper (7) mit einem Tragmittel (9) in die Öffnungen des Reifens (1) gezogen wird.

5. Vorrichtung zur Demontage eines Notlaufstützkörpers aus einem Reifen mit einem Montagetisch mit Mitteln zum Fixieren des Reifens,
**dadurch gekennzeichnet, dass**
der mit einem Tragmittel (9) verbundene Notlaufstützkörper (7) mittels einer Hebevorrichtung (10) aus dem Reifenhohlraum (14) gezogen wird.

6. Vorrichtung nach einem der Ansprüche 4 bis 5,
**dadurch gekennzeichnet, dass**
das Tragmittel (9) ein Traggurt ist.

7. Vorrichtung nach einem der Ansprüche 1 bis 6,
**dadurch gekennzeichnet**,
das die Mittel zum Fixieren des Reifens (1) auf dem Montagetisch (2) flächenförmige Einspannelemente (3) sind.

8. Vorrichtung nach Anspruch 7
**dadurch gekennzeichnet, dass**
die Einspannelemente (3) über Führungselemente (5) in einer Ebene parallel zur radialen Ebene (6) des Reifens (1) verstellbar sind.

9. Vorrichtung nach einem der Ansprüche 1 bis 8,
**dadurch gekennzeichnet, dass**
im Hohlraum des Notlaufstützkörpers (7) im Verbindungsbereich zum Traggurt (9) ein Schutzkörper (15) angeordnet ist.

10. Vorrichtung nach einem der Ansprüche 1 bis 9,
**dadurch gekennzeichnet, dass**
die Hebevorrichtung (10) ein pneumatisch oder hydraulisch betriebener Hebekran ist.

## Claims

1. Device for mounting a runflat support in a tyre having a mounting table with means for securing the tyre and having an opening in the mounting table which corresponds essentially to the outer diameter of the runflat support, **characterized in that** the device has a lifting device (10), wherein the radial plane (8) of the runflat support (7) is positioned essentially perpendicularly with respect to the radial plane (6) of the tyre (1), and the runflat support (7) is pulled into the openings of the tyre (1) with the lifting device (10) and subsequently swung into the tyre cavity (14).

2. Device according to Claim 1, **characterized in that** the runflat support (7) is swung into the tyre cavity (14) at the time when the centre point (16) of the radial plane (8) of the runflat support (7) lies essentially in the radial plane (6) of the tyre (1).

3. Device according to Claim 1 or 2, **characterized in that** the opening in the mounting table (2) has cutouts (17) for receiving the runflat support (7).

4. Device according to one of Claims 1 to 3, **characterized in that** the runflat support (7) is pulled into the openings of the tyre (1) with a carrying means (9).

5. Device for dismounting a runflat support from a tyre having a mounting table with means for securing the tyre, **characterized in that** the runflat support (7) which is connected to a carrying means (9) is pulled out of the tyre cavity (14) by means of a lifting device (10).

6. Device according to one of Claims 4 to 5, **characterized in that** the carrying means (9) is a carrying strap.

7. Device according to one of Claims 1 to 6, **characterized in that** the means for securing the tyre (1) on the mounting table (2) are planar clamping-in elements (3).

8. Device according to Claim 7, **characterized in that** the clamping-in elements (3) can be adjusted by means of guide elements (5) in a plane parallel to the radial plane (6) of the tyre (1).

9. Device according to one of Claims 1 to 8, **characterized in that** a protective body (15) is arranged in the cavity of the runflat support (7) in the region which connects to the carrying strap (9).

10. Device according to one of Claims 1 to 9, **characterized in that** the lifting device (10) is a pneumatically or hydraulically operated lifting crane.

## Revendications

1. Dispositif de montage d'un corps de soutien pour roulage de secours dans un bandage de roue, à l'aide d'une table de montage qui présente des moyens de fixation du bandage de roue et une ouverture ménagée dans la table de montage et qui correspond essentiellement au diamètre extérieur du corps de soutien de roulage de secours,
**caractérisé en ce que**
le dispositif présente un dispositif de relèvement (10), le plan radial (8) du corps (7) de soutien de roulage de secours étant placé essentiellement perpendiculairement au plan radial (6) du bandage de roue (1), le corps (7) de soutien de roulage de secours étant tiré à l'aide du dispositif de relèvement (10) dans les ouvertures du bandage (1) et étant ensuite incliné dans l'espace creux (14) du bandage de roue.

2. Dispositif selon la revendications 1, **caractérisé en ce que** le corps (7) de soutien de roulage de secours est incliné dans l'espace creux (14) du bandage au moment où le centre (16) du plan radial (8) du corps (7) de soutien de roulage de secours est situé essentiellement dans le plan radial (6) du bandage (1).

3. Dispositif selon les revendications 1 ou 2, **caractérisé en ce que** l'ouverture ménagée dans la table de montage (2) présente des découpes (17) de réception du corps (7) de soutien de roulage de secours.

4. Dispositif selon l'une des revendications 1 à 3, **caractérisé en ce que** le corps (7) de soutien de roulage de secours est tiré dans les ouvertures du bandage (1) à l'aide d'un moyen de support (9).

5. Dispositif de démontage d'un corps de soutien de roulage de secours d'un bandage à l'aide d'une table de montage qui présente des moyens de fixation du bandage, **caractérisé en ce que** le corps (7) de soutien de roulage de secours relié à un moyen de support (9) est tiré hors de l'espace creux (14) du bandage au moyen d'un dispositif de relèvement (10).

6. Dispositif selon l'une des revendications 4 à 5, **caractérisé en ce que** le moyen de support (9) est une courroie de support.

7. Dispositif selon l'une des revendications 1 à 6, **caractérisé en ce que** les moyens de fixation du bandage (1) sur la table de montage (2) sont des éléments de serrage (3) de forme plate.

8. Dispositif selon la revendication 7, **caractérisé en ce que** les éléments de serrage (3) peuvent être ajustés par des éléments de guidage (5) dans un plan parallèle au plan radial (6) du bandage (1).

9. Dispositif selon l'une des revendications 1 à 8, **caractérisé en ce qu'**un corps de protection (15) est disposé dans l'espace creux du corps (7) de soutien de roulage de secours dans la zone où il est relié à la courroie de support (9).

10. Dispositif selon l'une des revendications 1 à 9, **caractérisé en ce que** le dispositif de relèvement (10) est une grue de relèvement actionnée pneumatiquement ou hydrauliquement.
